# FASCICULE DE BREVET EUROPEEN

(11) **EP 0 996 675 B1**
(45) Date de publication et mention de la délivrance du brevet: **03.09.2003**
(21) Numéro de dépôt: 98938657.8
(22) Date de dépôt: 26.06.1998
(51) Int. Cl.: C08L 19/00, C08K 5/31, C08K 5/17, C08K 5/54, C08L 21/00

(54) **COMPOSITION DE CAOUTCHOUC VULCANISABLE AU SOUFRE CONTENANT DE LA SILICE**
KIESELSAÜREHALTIGE SCHWEFEL-VULKANISIERBARE KAUTSCHUKMISCHUNG
SULPHUR-VULCANISABLE RUBBER COMPOSITION CONTAINING SILICA

(30) Priorité: 09.07.1997 FR 9708839
(43) Date de publication de la demande: 03.05.2000
(73) Titulaire: COMPAGNIE GENERALE DES ETABLISSEMENTS MICHELIN-MICHELIN & CIE, 63040 Clermont-Ferrand Cédex (FR)
(72) Inventeur: DANIEL, Marc, F-63170 Aubière (FR); LABAUZE, Gérard, F-63100 Clermont-Ferrand (FR)
(74) Mandataire: Hiebel, Robert
(86) Numéro de dépôt international: EP9803917
(87) Numéro de publication internationale: WO99002601

(56) Documents cités:
- EP-A- 0 819 731
- US-A- 4 894 409

## Description

La présente invention est relative à des compositions élastomères comportant à titre de charge renforçante de la silice, ces compositions présentant, à l'état vulcanisé, des propriétés hystérétiques améliorées.

Depuis que les économies de carburant et la nécessité de protéger l'environnement sont devenues une priorité, il est souhaitable de produire des mélanges possédant une hystérèse aussi faible que possible afin de pouvoir les mettre en oeuvre sous forme de produits semi-finis entrant dans la composition d'enveloppes de pneumatiques tels que, par exemple, des sous-couches, des gommes de liaison entre caoutchoucs de différentes natures ou de calandrage de renforts métalliques ou textiles, des gommes de flancs ou des bandes de roulement et obtenir des pneumatiques aux propriétés améliorées, ces pneumatiques possédant notamment une résistance au roulement réduite.

Pour atteindre un tel objectif, de nombreuses solutions ont été proposées consistant notamment à modifier la nature des polymères et copolymères diéniques en fin de polymérisation au moyen d'agents de couplage ou d'étoilage ou de fonctionnalisation. La très grande majorité de ces solutions se sont essentiellement concentrées sur l'utilisation des polymères modifiés avec du noir de carbone comme charge renforçante dans le but d'obtenir une bonne interaction entre le polymère modifié et le noir de carbone, car l'usage de charges blanches renforçantes, notamment la silice, s'est révélé inapproprié en raison du faible niveau de certaines propriétés de telles compositions et, par voie de conséquence, de certaines propriétés des pneumatiques mettant en oeuvre ces compositions. A titre d'exemples illustratifs de cet art antérieur, on peut citer US-A-4 677 165 qui décrit la réaction de polymères diéniques vivants fonctionnalisés à l'aide d'un dérivé de la benzophénone, pour obtenir des polymères aux propriétés améliorées dans des compositions contenant du noir de carbone à titre de charge renforçante. EP-A-0 451 604 décrit à titre d'agent de fonctionnalisation un composant portant une fonction amine et permettant une interaction améliorée entre le polymère modifié et le noir de carbone. Dans le même but, US-A-4 647 625 décrit la fonctionnalisation d'élastomères par réaction d'un polymère vivant avec de la N-méthyl-pyrrolidone. EP-A-0 590 491 et EP-A-0 593 049 décrivent des polymères portant une fonction amine tertiaire en extrémité de chaîne et permettant également une meilleure interaction avec du noir de carbone.

Quelques solutions ont été également proposées concernant l'utilisation de la silice à titre de charge renforçante dans les compositions destinées à constituer des bandes de roulement de pneumatique. On a proposé dans ce but des polymères fonctionnalisés comportant des fonctions alcoxysilanes en bout de chaîne des polymères, comme décrit dans EP-A-0 299 074 et EP-A-0 447 066. Seuls ces polymères fonctionnalisés ont été décrits dans l'art antérieur comme efficaces pour réduire l'hystérèse et pour améliorer la résistance à l'abrasion, mais la fabrication industrielle de ces polymères pose des problèmes d'évolution de macrostructure lors des étapes de récupération, comme le stripping et le séchage. Pour tenter de résoudre ces problèmes, on a proposé d'utiliser des polymères fonctionnalisés avec des fonctions alcoxysilanes non hydrolysables, comme décrit dans US-A-5 066 721, mais leur efficacité en mélange avec de la silice est réduite. La préparation de polymères diéniques à fonction amine est connue de l'homme de l'art par exemple du brevet US-A-4.894.409 qui décrit la préparation de polymères fonctionnalisés avec des amines aromatiques. Les polymères à fonction amine ne sont pas très efficaces en utilisation avec la silice, comme mentionné dans EP-A-0 661 298.

Cet intérêt pour les compositions renforcées à la silice a été relancé avec la publication de EP-A-0 501 227 qui divulgue une composition de caoutchouc vulcanisable au soufre obtenue par travail thermo-mécanique d'un copolymère de diène conjugué et d'un composé vinylaromatique préparé par polymérisation en solution avec 30 à 150 parties en poids pour 100 parties en poids d'élastomère d'une silice précipitée particulière qui présente un excellent compromis entre plusieurs propriétés contradictoires et qui, pour la première fois, permet la commercialisation de pneumatiques ayant une bande de roulement chargée à la silice possédant l'excellent compromis requis.

On peut également citer la demande de brevet européen EP-A-819 731, correspondant an document WO-A-9630444, qui divulgue une composition renforcée à la silice comprenant essentiellement un élastomère diénique constitué d'un copolymère à fonctions amines et un agent de liaison silice / élastomère de type silane sulfuré. Ce copolymère comporte le long de la chaîne des groupes aminés provenant d'amines non aliphatiques ou cycloaliphatiques et un monomère vinylique aromatique aminé.

On notera que le problème censé être résolu dans ce dernier document ne se rapporte pas à l'obtention de propriétés hystérétiques améliorées.

La présente invention concerne une nouvelle composition de caoutchouc contenant de la silice, ou un mélange de silice et de noir de carbone, à titre de charge renforçante, cette composition présentant des propriétés de mise en oeuvre à cru satisfaisantes et des propriétés améliorées à l'état vulcanisé notamment une excellente hystérèse et un excellent renforcement.

L'invention concerne aussi les bandes de roulement d'enveloppes de pneumatiques qui comportent au moins une composition conforme à l'invention, ainsi que les bandes de roulement qui sont obtenues par vulcanisation de ces bandes de roulement.

L'invention concerne aussi les enveloppes de pneumatiques comportant au moins une composition conforme à l'invention, ainsi que les enveloppes de pneumatiques qui sont obtenues par vulcanisation de ces enveloppes, au moins une composition conforme à l'invention étant utilisée par exemple dans la bande de roulement.
La composition de caoutchouc vulcanisable au soufre conforme à l'invention est caractérisée en ce qu'elle comporte :
a) au moins un polymère choisi dans l'ensemble constitué par les polymères diéniques, les copolymères oléfine/diène monomère et les copolymères iso-oléfine/para-alkylstyrène halogènes ;
b) de la silice comme charge ;
c) au moins un agent favorisant la liaison entre la silice et le polymère, cet agent ayant la formule (I) :

   Z¹-R¹-Sₙ-R²-Z²

   dans laquelle :
   n est un nombre entier de 2 à 8,
   R¹ et R², qui peuvent être identiques ou différents, sont choisis chacun dans l'ensemble formé par les groupes alkylènes substitués ou non substitués ayant un total de 1 à 18 atomes de carbone et les groupes arylènes substitués ou non substitués ayant un total de 6 à 12 atomes de carbone,
   Z ¹ et Z², qui peuvent être identiques ou différents,
      représentent chacun un groupe 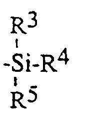
   où R³, R⁴ et R⁵, qui peuvent être identiques ou différents, sont choisis chacun dans l'ensemble formé par les groupes alkyles ayant de 1 à 4 atomes de carbone, les groupes phényles, les groupes alcoxyles ayant de 1 à 8 atomes de carbone et les groupes cycloalcoxyles ayant de 5 à 8 atomes de carbone, à la condition qu'au moins un des R³, R⁴ et R⁵ soit un alcoxyle ou un cycloalcoxyle ;
d) au moins une guanidine substituée par au moins deux groupes qui peuvent être identiques ou différents et qui sont choisis chacun dans l'ensemble constitué par les groupes alcoyles, aryles ou aralcoyles ;
   et en ce qu'elle présente au moins une des caractéristiques suivantes :
   - elle comporte au moins un polymère diénique qui comporte au moins un groupe terminal aminé d'une amine aliphatique ou cycloaliphatique qui lui est lié en extrémité de chaîne, le polymère étant alors dépourvu de groupement alcoxysilane et de groupement silanol ;
   - la composition comporte au moins une amine aliphatique ou cycloaliphatique libre.

Dans ce qui suit, le terme "polymère" couvre à la fois les homopolymères et les copolymères, le terme "copolymère" couvrant les polymères obtenus chacun à partir de deux, ou plus de deux, monomères, par exemple des terpolymères.

Par polymère diénique on entend tout homopolymère obtenu par polymérisation d'un monomère diène conjugué ayant de 4 à 12 atomes de carbone, tout copolymère obtenu par copolymérisation d'un ou plusieurs diènes conjugués entre eux ou avec un ou plusieurs composés vinylaromatiques ayant de 8 à 20 atomes de carbone. A titre de diène conjugué on peut citer notamment le butadiène-1,3, le 2-méthyl-1,3-butadiène, les 2,3-di(alcoyle en C₁ à C₅)-1,3-butadiène tels que, par exemple, le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, le phényl-1,3-butadiène, un aryl-1,3-butadiène, le 1,3-pentadiène, le 2,4-hexadiène.

A titre de composés vinylaromatiques conviennent notamment le styrène, l'ortho-, métha-, para-méthylstyrène, le mélange commercial "vinyle-toluène", le para-tertiobutyl-styrène, les méthoxy-styrènes, les chloro-styrènes, le vinylmésithylène, le divinylbenzène, le vinylnaphtalène.

Les copolymères peuvent contenir par exemple entre 99 % et 20 % en poids d'unités diéniques et de 1 % à 80 % en poids d'unités vinylaromatiques. Les polymères peuvent avoir toute microstructure qui est fonction des conditions de polymérisation utilisées, notamment de la présence ou non d'un agent modifiant et/ou randomisant et des quantités d'agent modifiant et/ou randomisant employés.

A titre préférentiel conviennent les polybutadiènes et en particulier ceux ayant une teneur en unités-1,2 comprise entre 1 % et 80 %, les polyisoprènes, les copolymères de butadiène-styrène et en particulier ceux ayant une teneur en styrène comprise entre 5 et 50 % en poids et plus particulièrement entre 20 % et 40 % en poids, une teneur en liaisons-1,2 de la partie butadiénique comprise entre 4 % et 65 %, une teneur en liaisons trans-1,4 comprise entre 30 % et 80 %. Dans le cas de copolymères de butadiène-styrène-isoprène conviennent ceux ayant une teneur en styrène comprise entre 5 et 50 % en poids et plus particulièrement comprise entre 10 % et 40 %, une teneur en isoprène comprise entre 15 % et 60 % en poids et plus particulièrement comprise entre 20 % et 50 % en poids, une teneur en butadiène comprise entre 5 et 50 % en poids et plus particulièrement comprise entre 20 % et 40 % en poids, une teneur en unités-1,2 de la partie butadiénique comprise entre 4 % et 85 %, une teneur en unités trans-1,4 de la partie butadiénique comprise entre 6 % et 80 %, une teneur en unités-1,2 plus -3,4 de la partie isoprénique comprise entre 5 % et 70 % et une teneur en unités trans-1,4 de la partie isoprénique comprise entre 10 % et 50 %.

Lorsque le polymère diénique comporte un groupe terminal aminé, il est alors dépourvu de groupement alcoxysilane et de groupement silanol et il peut être un homopolymère ou copolymère obtenu à partir des monomères précités, ce polymère pouvant être obtenu par initiation ou fonctionnalisation.

Dans le cas où le groupe terminal aminé est introduit par initiation, la polymérisation est alors avantageusement réalisée avec un initiateur de type amidure de lithium comme décrit dans la littérature, par exemple dans l'ouvrage de T.C. Cheng, Anionic Polymerization, publié par l'American Chemical Society, Washington, p. 513, 1981. Cet amidure de lithium, de formule : 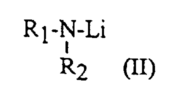 dans laquelle R₁ et R₂, indépendamment l'un de l'autre, sont chacun un groupe alkyle, ou forment ensemble un cycloalkyle, le nombre d'atomes de carbone de l'ensemble de R₁ et R₂ étant de préférence de 2 à 15.

A titre préférentiel, R₁ et R₂ peuvent être chacun un radical éthyle, butyle, ou former ensemble un radical cycloalkyle ayant de 4 à 6 atomes de carbone.

L'initiateur de formule (II) est le cas échéant préparé en présence d'un agent polaire comme le tétrahydrofuranne, par réaction de l'amine R₁-NH-R₂ correspondante, par exemple l'hexaméthylèneimine, avec un alkyllithium, par exemple le n-butyllithium.

Dans le cas où le groupe terminal aminé est introduit par une fonctionnalisation à l'issue de la polymérisation, ou peut par exemple utiliser les procédés de fonctionnalisation décrits dans EP-A-451 604, US-A-4 647 625, ou dans "Synthesis of polymers with amino end groups. 3. Reactions of anionic living polymers with α-halo-ω-aminoalkanes with a protected amino functionality", Kenji Ueda et al, Macromolecules, 1990, 23, pages 939-945.

La polymérisation peut être effectuée en continu ou en discontinu. On effectue généralement la polymérisation à une température comprise entre 20 °C et 120 °C et de préférence comprise entre 30 °C et 90 °C.

Les copolymères oléfine-diène peuvent être notamment les EPDM (éthylène-propylènediène monomère), comme les copolymères éthylène-propylène-hexadiène1-4, les copolymères éthylène-propylène-éthylidènenorbornène, les copolymères éthylène-propylène-dicyclopentadiène, les caoutchoucs butyle, en particulier les copolymères isobutylène-isoprène halogéné le cas échéant. Les copolymères iso-oléfine/para-alkylstyrène halogéné peuvent être par exemple les caoutchoucs isobutylène-paraméthylstyrène halogénés commercialisés par la Société Exxon sous la marque EXXPRO.

Les polymères peuvent être par exemple à blocs, statistiques, séquencés, microséquencés, et être préparés en dispersion, en solution, en masse ou en phase gazeuse.

La composition conforme à l'invention peut comporter un mélange de deux, ou plus, polymères précédemment définis.

L'amine aliphatique ou cycloaliphatique libre peut être une amine primaire, secondaire ou tertiaire. On peut citer à titre d'exemples non limitatifs les amines suivantes : les butyl, dibutyl, tributylamines, les pentyl, dipentyl, tripentylamines, les hexyl, dihexyl, trihexylamines, les cyclohexyl, dicyclohexyl, tricyclohexylamines, les benzyl, dibenzyl, tribenzylamines, les octyl, dioctyl, trioctylamines, les décyl, didécylamines, les dodécyl, didodécylamines, la pyrrolidine et les alcoylpyrrolidines, la pipéridine et les alcoylpipéridines, l'hexaméthylèneimine et les alcoylhexaméthylèneimines, ces amines pouvant être utilisées seules ou en mélange entre elles.

De préférence, la teneur en amine libre, ou en mélange d'amines libres, est de 0,5 à 4 % en poids par rapport à la silice ou au total des silices, cette teneur étant avantageusement de 1 à 3 % en poids.

La guanidine substituée peut être par exemple la triphénylguanidine, la diphénylguanidine, la di-o-tolylguanidine. La composition peut comporter un mélange de deux, ou plus, guanidines substituées.

De préférence la teneur en guanidine substituée, ou en mélange de guanidines substituées, est de 0,5 à 4 % en poids par rapport à la silice ou au total des silices, cette teneur étant avantageusement de 1 à 3 % en poids.

La silice utilisée comme charge peut être toute silice connue de l'homme de l'art présentant une surface BET inférieure ou égale à 450 m²/g, une surface spécifique CTAB inférieure ou égale à 450 m²/g, même si cette amélioration est plus prononcée avec une silice précipitée hautement dispersible. Par silice hautement dispersible on entend toute silice ayant une aptitude à la désagglomération et à la dispersion dans une matrice polymérique très importante observable par microscopie électronique ou optique, sur coupes fines. Comme exemples non limitatifs de telles silices hautement dispersibles préférentielles, on peut citer celles obtenues selon les procédés décrits dans EP-A-0 157 703 et EP-A-0 520 862 ou la silice Zeosil 1165 MP de la Société Rhône-Poulenc, la silice Perkasil KS 430 de la Société Akzo, la silice Hi-Sil 2000 de la Société PPG, les silices Zeopol 8741 et Zeopol 8745 de la Société Huber. L'effet bénéfique est obtenu conformément à l'invention quel que soit l'état physique sous lequel se présente la silice, c'est-à-dire qu'elle se présente sous forme de poudre, de microperles, de granulés, de billes, et quelle que soit la surface spécifique de la silice. On peut bien entendu utiliser des coupages de différentes silices et utiliser d'autres charges blanches, comme la craie, le kaolin, l'alumine.

En association avec la silice, on peut utiliser le cas échéant dans la charge renforçante du noir de carbone, notamment tous les noirs commercialement disponibles ou conventionnellement utilisés dans les pneumatiques et particulièrement dans les bandes de roulement.

De préférence la charge est entièrement constituée d'une ou plusieurs silices, ou elle contient au moins 40 % en poids et avantageusement au moins 50 % en poids d'une silice ou d'un mélange de silices.

La charge renforçante, qui peut donc comporter de la silice sans noir de carbone ou à la fois de la silice et du noir de carbone, présente dans la composition un taux de charge qui peut varier par exemple de 30 à 100 parties en poids pour 100 parties en poids du polymère ou de l'ensemble des polymères.

A titre d'exemples d'agent de formule (I) favorisant la liaison entre la silice, ou l'ensemble des silices, et le polymère diénique, ou l'ensemble des polymères diéniques, on peut citer : les 2,2'-bis(triméthoxysilyléthyl)polysulfures, les 3,3'-bis (triméthoxysilylpropyl) polysulfures, les 3,3'-bis(triéthoxysilylpropyl)polysulfures, les 2,2'-bis(triéthoxysilylpropyl)polysulfures, les 2,2'-bis(tripropoxysilyléthyl)polysulfures, les 2,2'-bis(tri-sec-butoxysilyléthyl)polysulfures, les 3,3'-bis(tri-t-butoxysilyléthyl)polysulfures, les 3,3'-bis(triéthoxysilyléthyltolylène)polysulfures, les 3,3'-bis(triméthoxysilyléthyltolylène)polysulfures, les 3,3'-bis(triisopropoxysilylpropyl)polysulfures, les 3,3'-bis(trioctoxysilylopropyl)polysulfures, les 2,2'-bis(2'-éthylhexoxysilyléthyl)polysulfures, les 2,2'-bis(diméthoxyéthoxysilyléthyl)polysulfures, les 3,3'-bis(méthoxyéthoxypropoxysilylpropyl)polysulfures, les 3,3'-bis(méthoxydiméthylsilylpropyl)polysulfures, les 3,3'-bis(cyclohexoxydiméthylsilylpropyl)polysulfures, les 4,4'-bis(triméthoxysilylbutyl)polysulfures, les 3,3'-bis(triméthoxysilyl-3-méthylpropyl)polysulfures, les 3,3'-bis(tripropoxysilyl-3-méthylpropyl)polysulfures, les 3,3'-bis(diméthoxyméthylsilyl-3-éthylpropyl)polysulfures, les 3,3'-bis(triméthoxysilyl-2-méthylpropyl)polysulfùres, les 3,3'-bis(diméthoxyphénylsilyl-2-méthylpropyl)polysulfures, les 3,3'-bis(triméthoxysilylcyclohexyl)polysulfures, les 12,12'-bis(triméthoxysilyldodécyl)polysulfures, les 12,12'-bis(triéthoxysilyldodécyl)polysulfures, les 18,18'-bis(triméthoxysilyloctadécyl) polysulfures, les 18,18'-bis(méthoxydiméthylsilyloctadécyl)polysulfures, les 2,2'-bis(triméthoxysilyl-2-méthyléthyl)polysulfures, les 2,2'-bis(triéthoxysilyl-2-méthyléthyl)polysulfures, les 2,2'-bis(tripropoxysilyl-2-méthyléthyl)polysulfures, et les 2,2'-bis(trioctoxysilyl-2-méthyléthyl)polysulfures. Un tel agent de liaison est par exemple celui vendu par la Société Degussa sous la désignation commerciale Si69 dont la formule moyenne est bis(3-triéthoxysilylpropyl)tétrasulfure. Ces polysulfures peuvent être utilisés isolément ou en mélange entre eux.

De préférence, dans l'agent de liaison de formule (I), n est supérieur à 2, ou s'il y a plusieurs tels agents, au moins 80 % de n est supérieur à 2 pour l'ensemble de ces composés.

De préférence, la teneur en agent de formule (I), ou en mélange de tels agents, est d'au moins 4 % en poids par rapport au poids de la silice, ou du mélange de silices, utilisées comme charge.

Les compositions conformes à l'invention peuvent également contenir les autres constituants et additifs habituellement utilisés dans les mélanges de caoutchouc, comme des plastifiants, pigments, antioxydants, du soufre, des accélérateurs de vulcanisation, des huiles d'extension, un ou des agents de liaison autres que ceux de formule (I) et/ou un ou des agents de recouvrement de la silice tels que des polyols, des alcoxysilanes, en plus de l'agent de formule (I). De préférence, on n'utilise comme agent de liaison avec la silice qu'un ou plusieurs agents de formule (I) ou si d'autres agents de liaison sont présents, le poids du ou des agents de liaison de formule (I) est supérieur à 50 % du poids de l'ensemble des agents de liaison. Des modes particuliers de réalisation des compositions conformes à l'invention sont indiqués dans les revendications dépendantes 2 à 8.

L'invention est illustrée plus en détail par les exemples qui suivent et qui ne sauraient constituer une limitation de la portée de l'invention.

Dans les exemples, les propriétés des charges, notamment la silice, et des compositions sont évaluées comme suit :
- Viscosité Mooney : ML(1+4) à 100 °C mesurée selon la norme ASTM D-1646 ; elle est désignée par la suite comme "ML(1+4)100°".
- Modules d'allongement à 300% (MA 300), 100% (MA 100) et 10% (MA 10) : mesures effectuées selon la norme ISO 37.
- Indices de cassage Scott : mesurés à 20 °C (ci-après abrégés en Scott20°), la force de rupture (Fr) est exprimée en MPa et l'allongement à la rupture (Ar) est exprimé en %.
- Pertes hystérétiques : mesurées par rebond à 60 °C, la déformation est de l'ordre de 40 % ; ces pertes sont désignées par la suite comme "PH", la déformation étant abrégée en "déf".
- Propriétés dynamiques en cisaillement, selon la norme ASTM D2231-71 (réapprouvée en 1977) : mesures effectuées en fonction de la déformation à 23 °C et à 10 hertz. La non linéarité, exprimée en MPa, qui est la différence de module de cisaillement entre 0,15 % et 50 % de déformation crête-crête, est désignée par la suite comme "DeltaG*". L'hystérèse est exprimée par la mesure de tgδ et G" à 7 % de déformation.

Dans tous les exemples qui suivent les chiffres concernant les divers composants des compositions sont donnés sous forme de parties en poids pour 100 parties en poids d'élastomère ou de mélange d'élastomères (pce), sauf indication différente, et les teneurs en styrène des polymères sont exprimées en % massiques et les teneurs d'enchaînement vinyliques (1,2) des polymères sont exprimés en % par rapport aux unités butadiéniques incorporées.

### Exemple 1

On utilise la formule de base F1 suivante :

| | |
|---|---|
| SBR | 100 |
| Silice (1) | 80 |
| Huile aromatique | 40 |
| Agent de liaison (2) | 6,4 |
| ZnO | 2,5 |
| Acide stéarique | 1,5 |
| Antioxydant (6PPD) | 1,9 |
| Cire ozone C32T | 1,5 |
| Soufre | 1,1 |
| Sulfénamide (CBS) | 2 |
| Diphénylguanidine | 1,5 |
| (1) = Silice ZEOSIL 1165 (de la société Rhône-Poulenc) | |
| (2) = Agent de liaison: Si69 de la société Degussa | |

L'abréviation "SBR" représente un élastomère styrène-butadiène choisi parmi les trois produits suivants, qui sont tous polymérisés en solution (SSBR) :
SSBR A : teneur en 1,2 = 41 % ; teneur en styrène = 26 % ;
   Tg = - 38°C ; ML(1+4)100° = 30 ;
SSBR B : même micro et macrostructure que le SSBR A
   (Tg = - 38°C ; ML(1+4)100° = 30) mais initié avec l'hexaméthylèneiminelithium HMINLi (amine tertiaire cycloaliphatique fixée en bout de chaine du SBR) ;
SSBR C : même micro et macrostructure que le SSBR A
   (Tg = - 38°C ; ML(1+4)100° = 30) mais contenant de la dodécylhexaméthylèneimine (DDCHMI) libre introduite juste avant l'étape de stripping, après l'arrêt de la polymérisation.

La synthèse de ces élastomères est réalisée selon un procédé discontinu de la façon suivante.

### Préparation du SSBR A

Dans un réacteur de 10 litres contenant 6,4 litres de cyclohexane désaéré on injecte 167 g de styrène, 476 g de butadiène et 1500 ppm de THF. Les impuretés sont neutralisées à l'aide de n-butyllithium puis on ajoute 0,0035 mole de n-BuLi ainsi que 0,0019 mole de tertiobutylate de sodium utilisé comme agent randomisant, la polymérisation est conduite à 55 °C.

A 98 % de conversion, le polymère est stoppé à l'aide de 0,0050 mole de méthanol. La solution de polymère est agitée pendant 15 minutes à 55 °C.

Le polymère est antioxydé par addition de 0,20 gramme pour cent grammes d'élastomère (pce) de 2,2'-méthylène bis(4-méthyl-6- tertiobutylphénol) et 0,20 pce de N-(1,3-diméthylbutyl)-N'-phényl-p-phénylènediamine. Le solvant est éliminé par stripping à la vapeur d'eau et le polymère est séché sur outil à cylindres à 100 °C.

La viscosité inhérente du produit est de 1,43 dl/g.

Le pourcentage de styrène (RMN ¹H) est de 26 %, le taux d'enchaînements vinyliques est de 41 %.

### Préparation du SSBR B

Le SSBR B est préparé dans des conditions identiques à celles décrites pour le SBR A, à l'exception toutefois de l'initiation qui est réalisée à l'aide de 0,038 mole d'hexaméthylèneimine lithiée, utilisée à la place du n-BuLi.

La viscosité inhérente du polymère est de 1,45 dl/g.

### Préparation du SSBR C

Le SSBR C est synthétisé dans des conditions identiques à celles décrites pour le SSBR A à l'exception de la fin de réaction.

30 méq/kg de dodécylhexaméthylèneimine (0,8 pce) sont ajoutés à la solution polymérique après le stoppage au méthanol et avant l'opération de stripping du solvant à la vapeur d'eau.

Avec les élastomères précités on forme les quatre compositions suivantes :
Composition 1 : formule F1 dans laquelle le SBR est le SSBR A.
Composition 2 : formule F1 dans laquelle le SBR est le SSBR B.
Composition 3 : formule F1 dans laquelle le SBR est le SSBR C.
Composition 4 : formule F1 dans laquelle le SBR est le SSBR A et qui comporte en outre 0,8 pce de dodécylhexaméthylèneimine (DDCHMI) libre.

La composition 1 est une composition témoin, les compositions 2, 3 et 4 étant conformes à l'invention.

Pour effectuer les mélanges conduisant aux compositions, on opère un travail thermomécanique en deux étapes qui durent respectivement 5 et 4 minutes, en utilisant un mélangeur interne à palettes, avec une vitesse moyenne des palettes de 45 tours/min jusqu'à atteindre une température maximale de tombée de 160 °C tandis que l'étape de finition est effectuée à 30 °C. Dans le cas de la composition 4, l'addition de l'amine libre (DDCHMI) est réalisée au mélangeur interne, lors de la première étape de ce travail thermomécanique.

La vulcanisation est effectuée pour toutes les compositions à 150 °C pendant 50 min.

On compare entre-elles les propriétes obtenues tant à l'état non vulcanisé qu'à l'état vulcanisé des compositions 1 à 4.

Les résultats sont consignés dans le tableau 1.

**TABLEAU 1**

| Compositions | 1 | 2 | 3 | 4 |
|---|---|---|---|---|
| | F1 SSBR A | F1 SSBR B | F1 SSBR C | F1+0,8pce amine SSBR A |
| Initiateur | nBuLi | HMINLi | nBuLi | nBuLi |
| Stoppeur | MeOH | MeOH invention | MeOH+Amine invention | MeOH invention |

| Propriétés à l'état non vulcanisé : | | | | |
|---|---|---|---|---|
| ML(1+4)100° | 51 | 55 | 54 | 51 |

| Propriétés à l'état vulcanisé : | | | | |
|---|---|---|---|---|
| Shore | 64,0 | 58,8 | 56,5 | 59,4 |
| MA10 | 5,10 | 3,83 | 3,48 | 3,95 |
| MA100 | 1,72 | 1,71 | 1,61 | 1,57 |
| MA300 | 2,03 | 2,26 | 2,19 | 1,96 |
| MA300/MA100 | 1,18 | 1,32 | 1,36 | 1,25 |
| Scott20° Fr | 18,1 | 20,9 | 20,4 | 19,0 |
| Ar% | 520 | 580 | 580 | 570 |
| PH (déf = 40%) | 33,2 | 25,1 | 26,1 | 29,4 |

| Propriétés dynamiques en déformation (10 Hz / déf 0, 15 % - 50 %) : | | | | |
|---|---|---|---|---|
| DeltaG* | 4,05 | 1,09 | 1,03 | 1,95 |
| tgδ | 0,355 | 0,216 | 0,224 | 0,266 |
| G" | 1,230 | 0,433 | 0,436 | 0,690 |

Le tableau 1 montre que les trois compositions conformes à l'invention 2 à 4 présentent des propriétés d'hystérèse notablement améliorées par rapport à la composition témoin 1, et ceci aussi bien pour une déformation faible (valeurs de tgδ et G") que pour une déformation importante (valeurs de PH), et que ces compositions conformes à l'invention présentent des propriétés de renforcement et de tenue à la rupture notablement meilleures que celles de la composition témoin (valeurs de MA300/MA100 et de Scott20°). Cette amélioration pouvant donc être obtenue avec un polymère non fonctionnalisé (compositions 3 et 4).

On constate en outre que la composition 4, tout en étant meilleure que la composition témoin pour les raisons précitées, présente des propriétés légèrement inférieures à celles des compositions 2 et 3, ce qui montre que l'introduction de l'amine liée au polymère ou parfaitement dispersée dans la matrice élastomérique par ajout en solution avant stripping est plus efficace pour améliorer les propriétés d'hystérèse et de cohésion mécanique.

### Exemple 2

On utilise la même formule de base F1 que dans l'exemple 1 et les quatre SSBR suivants :
- SSBR D : Tg = - 38 °C ; teneur en 1,2 = 41 % ; teneur en styrène = 26 % ; ML(1+4)100° = 70
- SSBR E : Tg = - 38 °C ; teneur en 1,2 = 41 % ; teneur en styrène = 26 % ; fonctionnalisé à l'aide de l'hexaméthylcyclotrisiloxane (D3) ; ML(1+4)100° = 60
- SSBR F : Tg = - 38 °C ; teneur en 1,2 = 41 % ; teneur en styrène = 26 % ; étoilé à l'aide du tétrachlorure d'étain ; ML(1+4)100° = 70
- SSBR G : Tg = - 38 °C ; teneur en 1,2 = 41 % ; teneur en styrène = 26% ; fonctionnalisé à l'aide de la bis-diéthylaminobenzophénone ; ML(1+4)100° = 70

La synthèse de tous ces éiastomères est réalisée selon un procédé continu, de la façon suivante :

### Préparation des SSBR D, E et G

Dans un réacteur de 14 litres de capacité utile avec agitateur de type turbine, on introduit en continu du cyclohexane, du butadiène, du styrène et du tétrahydrofuranne aux rapports massiques 100: 10,00: 4,30: 0,3 ainsi qu'une solution de n-butyllithium (SSBR D et G : 460 micromoles de n-BuLi actif pour 100 grammes de monomères, SSBR E : 500 micromoles). Les débits de ces différentes solutions sont calculés pour que le temps de séjour soit de 40 minutes sous forte agitation. La température est maintenue constante à 60 °C. En sortie du réacteur, les conversions mesurées sur des prélèvement sont de 85 % (SSBR D et G) et 88 % (SSBR E). Les trois SBR contiennent 26 % de styrène incorporé (en masse) et une teneur de 41 % en liaisons-1,2 pour la partie butadiénique.

Le SSBR D est stoppé à l'aide de méthanol (rapport MeOH/n-BuLi = 1,5).

Le SSBR E est stoppé par addition de D3 (rapport D3/n-BuLi = 0,40).

Le SSBR G est stoppé par addition de bis-diéthylaminobenzophénone (rapport BDEAB/n-BuLi = 1,5.

Pour les 2 polymères E et G, un temps de contact entre le polymère et l'amine de 40 minutes est assuré à l'aide d'un second réacteur agité et chauffé à 60 °C.

Pour les trois élastomères, on ajoute 0,8 pce de 2,2'-méthylène bis(4-méthyl-6-tertiobutylphénol) et 0,2 pce de N-(1,3- diméthylbutyl)-N-phényl-p-phénylènediamine utilisés comme anti- oxydants. Les polymères sont séparés du solvant par stripping du solvant à la vapeur d'eau puis séchés sur outil à cylindres à 100 °C pendant 10 minutes. Les viscosités inhérentes (dans le toluène) sont mesurées avant l'opération de stripping.

Le taux de fonction [Si(CH₃)₂OH] est déterminé à l'aide d'un dosage RMN du proton.

Le dosage RMN ¹H est effectué sur un échantillon ayant subi trois cycles de dissolution dans le toluène et coagulation dans le méthanol afin d'éliminer toute trace éventuelle d'hexaméthylcyclotrisiloxane résiduel (non lié au polymère). La masse moléculaire du SSBR E est de 175 000 g.mole⁻¹.

Le spectre RMN ¹H du SSBR E fonctionnalisé diméthylsilanol est caractérisé par des massifs à 0,05 ppm et 0,1 ppm correspondant au groupement Si(CH₃)₂. Le taux de motif [Si(CH₃)₂OH] est de 4,6 méq/kg soit un taux de chaines fonctionnalisées de 81 %.

Le taux de motif [(C₂H₅)₂ N-C₆H₄]₂ COH du SSBR G est de 5 méq./kg soit un taux de chaînes fonctionnalisées de 90 %. La masse moléculaire du SSBR G est de 180 000 g.mole⁻¹.

### Préparation du SSBR F

Le SSBR F est synthétisé dans des conditions analogues à celles décrites pour les SSBR D et E à l'exception toutefois de la quantité de BuLi utilisée ainsi que du mode de stoppage.

La quantité de n-BuLi actif est de 900 micromoles pour cent grammes de monomères.

A la sortie du réacteur la conversion est de 92 % (viscosité : 1,26 dl/g), le tétrachlorure d'étain est injecté en amont d'un mélangeur statique comportant 24 éléments. Les antioxydants sont ajoutés 5 minutes après l'injection de SnCl₄. La viscosité après étoilage est de 1,85 dl/g.

On réalise huit compositions référencées 5 à 11 de la façon suivante :
Composition 5 : formule F1 dans laquelle le SBR est le SSBR D ;
Composition 6 : composition 5 à laquelle on a ajouté 0,8 pce de DDCHMI ;
Composition 7 : formule F1 dans laquelle le SBR est le SSBR E ;
Composition 8 : composition 7 à laquelle on a ajouté 0,8 pce de DDCHMI ;
Composition 9 : formule F1 dans laquelle le SBR est le SSBR F ;
Composition 10 : composition 9 à laquelle on a ajouté 0,8 pce de DDCHMI ;
Composition 11 : formule F1 dans laquelle le SBR est le SSBR G ;
Composition 12 : composition 11 à laquelle on a ajouté 0,8 pce de DDCHMI.

La réalisation des compositions par mélange ainsi que leur vulcanisation sont effectuées comme dans l'exemple 1. Pour les compositions 6, 8, 10 et 12, l'addition de l'amine a été réalisée au mélangeur interne lors de la première étape de ce travail thermomécanique.

Les compositions 5, 7, 9 et 11 sont des compositions témoins, les compositions 6, 8, 10 et 12 étant conformes à l'invention.

Les tests sont opérés dans les mêmes conditions qu'à l'exemple 1, les résultats étant donnés dans le tableau 2.

**TABLEAU 2**

| Compositions | 5 | 6 | 7 | 8 | 9 | 10 | 11 | 12 |
|---|---|---|---|---|---|---|---|---|
| | F1 | F1 + amine 0,8 pce | F1 | F1+ amine 0,8pce | F1 | F1+ amine 0,8pce | F1 | F1+ amine 0,8pce |
| DDCHMI | SSBR D | | SSBR E | | SSBR F | | SSBRG | |
| Stoppeur | MeOH | | D3 | | SnC14 | | BDEAB | |

| Propriétés à l'état non vulcanisé : | | | | | | | | |
|---|---|---|---|---|---|---|---|---|
| ML(1+4)100° | 79 | 76 | 87 | 86 | 43 | 42 | 85 | 80 |

| Propriétés à l'état vulcanisé : | | | | | | | | |
|---|---|---|---|---|---|---|---|---|
| Shore | 63,3 | 59,0 | 59,2 | 58,8 | 60,8 | 58,7 | 62,8 | 59,7 |
| MA10 | 5,12 | 4,05 | 3,89 | 3,72 | 4,53 | 4,13 | 5,00 | 4,10 |
| MA100 | 1,57 | 1,43 | 1,61 | 1,69 | 1,54 | 1,46 | 1,58 | 1,48 |
| MA300 | 1,75 | 1,73 | 2,01 | 2,23 | 1,74 | 1,71 | 1,81 | 1,81 |
| MA300/MA100 | 1,11 | 1,21 | 1,25 | 1,32 | 1,13 | 1,17 | 1,14 | 1,22 |
| Scott20° Fr | 211 | 20,9 | 24,0 | 25,0 | 17,6 | 18,1 | 21,6 | 21,8 |
| Ar% | 650 | 680 | 610 | 590 | 600 | 620 | 610 | 640 |
| PH (déf = 40%) | 33,1 | 29,1 | 24,6 | 22,5 | 37,4 | 35,6 | 32,4 | 28,6 |

| Propriétés dynamiques en déformation (10 Hz / déf 0, 15 % - 50 %) : | | | | | | | | |
|---|---|---|---|---|---|---|---|---|
| DeltaG* | 4,81 | 2,70 | 1,48 | 1,18 | 3,00 | 2,23 | 3,43 | 2,12 |
| tgδ | 0,370 | 0,281 | 0,249 | 0,228 | 0,336 | 0,305 | 0,321 | 0,265 |
| G" | 1,430 | 0,890 | 0,576 | 0,488 | 1,060 | 0,843 | 1,150 | 0,840 |

Les compositions 6, 8, 10 et 12 conformes à l'invention montrent que l'addition de l'amine libre permet, avec n'importe quel élastomère fonctionnalisé ou étoilé, d'améliorer significativement les hystérèses et le renforcement par rapport aux propriétés obtenues avec les compositions classiques obtenues sans addition d'amine libre et même avec celles comportant un polymère possédant en extrémité de chaîne des fonctions dialkylamine aromatique.

### Exemple 3

On utilise les formules de base F2 et F3 suivantes :

| Formule F2 | |
|---|---|
| SBR | 100 |
| Silice (1) | 60 |
| Huile aromatique | 20 |
| Agent de liaison (2) | 4,8 |
| ZnO | 2,5 |
| Acide stéarique | 1,5 |
| Antioxydant (6PPD) | 1,9 |
| Cire ozone C32T | 1,5 |
| Soufre | 1,1 |
| Sulfénamide (CBS) | 2 |
| Diphénylguanidine | 1,1 |
| (1) = Silice ZEOSIL 1165 (fabriqué par la société Rhône-Poulenc) | |
| (2) = Agent de liaison : Si69 Dégussa | |

| Formule F3 | |
|---|---|
| SBR | 100 |
| Silice (1) | 40 |
| Noir N234 | 40 |
| Huile aromatique | 40 |
| Agent de liaison (2) | 3,2 |
| ZnO | 2,5 |
| Acide stéarique | 1,5 |
| Antioxydant (6PPD) | 1,9 |
| Cire ozone C32T | 1,5 |
| Soufre | 1,1 |
| Sulfénamide (CBS) | 2 |
| Diphénylguanidine | 0,8 |
| (1) = Silice ZEOSIL 1165 (de la société Rhône-Poulenc) | |
| (2) = Agent de liaison : Si69 de la société Degussa | |

A l'aide de ces deux formules de base on réalise des compositions en utilisant les élastomères SSBR A et SSBR B de l'exemple 1.

Ces compositions sont les suivantes :
Composition 11 : formule F2, le SBR étant SSBR A ;
Composition 12 : formule F2, le SBR étant SSBR B ;
Composition 13 : formule F2, le SBR étant SSBR A avec en outre 0,8 pce de DDCHMI ;
Composition 14 : formule F3, le SBR étant SSBR A ;
Composition 15 : formule F3, le SBR étant SSBR B.

Les compositions 11 et 14 sont des compositions témoins, les compositions 12 et 13 et 15 étant conformes à l'invention.

La réalisation des compositions par mélange ainsi que leur vulcanisation sont effectuées comme dans l'exemple 1. L'addition de l'amine libre pour la composition 13 s'effectue au mélangeur interne, lors de la première étape de ce travail thermomécanique.

Les résultats sont consignés dans les tableaux 3 et 4.

**TABLEAU 3**

| Compositions | 11 | 12 | 13 |
|---|---|---|---|
| Formule | F2 | F2 | F2+amine |
| Amine | | | 0,8pce DDCHMI |
| SSBR | SSBR A | SSBR B | SSBR A |
| Initiateur | nBuLi | HMINLi | nBuLi |
| Stoppeur | MeOH | MeOH | MeOH |

| Propriétés à l'état non vulcanisé : | | | |
|---|---|---|---|
| ML(1+4)100° | 64 | 78 | 69 |

| Propriétés à l'état vulcanisé : | | | |
|---|---|---|---|
| Shore | 64,2 | 57,2 | 55,3 |
| MA10 | 5,41 | 3,68 | 3,38 |
| MA100 | 1,88 | 1,72 | 1,52 |
| MA300 | 2,20 | 2,44 | 2,13 |
| MA300/MA100 | 1,17 | 1,42 | 1,40 |
| Scott20° Fr | 22,8 | 23,5 | 23,1 |
| Ar% | 570 | 540 | 570 |
| PH (déf = 35 %) | 27,2 | 18,9 | 22,8 |

| Propriétés dynamiques en déformation (10 Hz déf 0, 15 % - 50 %) : | | | |
|---|---|---|---|
| DeltaG* | 3,07 | 0,39 | 0,38 |
| tgδ | 0,281 | 0,143 | 0,148 |
| G" | 0,878 | 0,247 | 0,252 |

Le tableau 3 montre, à la vue des propriétés à l'état vulcanisé, que l'addition de la dodécylhexaméthylèneimine libre (composition 13) ou que la présence de l'hexaméthylèneimine en bout de chaine (composition 12) permet là encore d'améliorer significativement les hystérèses et le renforcement par rapport aux propriétés obtenues avec la composition classique 11 non conforme à l'invention.

**TABLEAU 4**

| Compositions | 14 | 15 |
|---|---|---|
| Formule | F3 | F3 |
| SSBR | SSBR A | SSBR B |
| Initiatuer | nBuLi | HMINLi |
| Stoppeur | MeOH | MeOH |

| Propriétés à l'état non vulcanisé : | | |
|---|---|---|
| ML(1+4)100° | 56 | 72 |

| Propriétés à l'état vulcanisé : | | |
|---|---|---|
| Shore | 63,4 | 61,9 |
| MA10 | 5,22 | 4,77 |
| MA100 | 1,62 | 1,75 |
| MA300 | 1,72 | 2,07 |
| MA300/MA100 | 1,06 | 1,18 |
| Scott20° Fr | 17,8 | 19,0 |
| Ar% | 650 | 580 |
| PH (déf = 40%) | 42,1 | 35,3 |

| Propriétés dynamiques en déformation (10Hz / déf 0, 15 % - 50 %) : | | |
|---|---|---|
| DeltaG* | 6,04 | 3,91 |
| tgδ | 0,421 | 0,365 |
| G" | 1,770 | 1,250 |

Ce tableau montre que, dans le cas d'une charge à base de noir et de silice en proportion massique 50/50, l'addition d'amine dans la chaîne de l'élastomère améliore les propriétés d'hystérèses et de renforcement par rapport à celles obtenues avec le mélange témoin 14 correspondant dont l'élastomère ne contient pas d'amine.

### Exemple 4

Dans cet exemple on utilise les quatre compositions suivantes :
Composition 16 : formule F1 de base dans laquelle le SBR est le SSBR A ;
Composition 17 : composition 16 dans laquelle la DPG est remplacée par 1,9 pce de dodécylhexaméthylèneimine (DDCHMI), soit 7,1 mmoles, la teneur en mmoles de la DDCHMI étant la même que celle de la DPG dans la formule de base F1 (7,1 mmoles, également) ;
Composition 18 : composition 16 dans laquelle la teneur en DPG est de 2,5 pce (soit 11,8 mmoles) au lieu de 1,50 pce (7,1 mmoles) ;
Composition 19 : composition 16, dans laquelle on a ajouté 1,2 pce (4,5 mmoles) de DDCHMI.

Seule la composition 19 est conforme à l'invention, les compositions 16 à 18 étant des compositions témoins.

La réalisation des compositions et leur vulcanisation sont effectuées comme dans l'exemple 1. L'addition des amines, pour les compositions 17 et 19, s'effectue au mélangeur interne, lors de la première étape de ce travail thermomécanique.

Les résultats sont consignés dans le tableau 5.

**TABLEAU 5**

| Compositions | 16 | 17 | 18 | 19 |
|---|---|---|---|---|
| Formule | F1 | F1 | F1 | F1 |
| DPG (pce) (mmol) | 1,50 (7,1) | 0 | 2,5 (11,8) | 1,5 (7,1) |
| DDCHMI RAJOUTEE (PCE) | 0 | 1,9 (7,1) | 0 | 1,2 (4,5) |

| Propriétés à l'état non vulcanisé : | | | | |
|---|---|---|---|---|
| ML(1+4)100° | 51 | 46 | 47 | 54 |

| Propriétés à l'état vulcanisé : | | | | |
|---|---|---|---|---|
| Shore | 64,0 | 63,3 | 62,8 | 60,0 |
| MA10 | 5,10 | 5,17 | 4,32 | 4,15 |
| MA100 | 1,72 | 1,50 | 1,89 | 1,65 |
| MA300 | 2,03 | 1,57 | 2,59 | 2,07 |
| MA300/MA100 | 1,18 | 1,05 | 1,37 | 1,25 |
| Scott20° Fr | 18,1 | 18,3 | 20,4 | 20,8 |
| Ar% | 520 | 670 | 500 | 560 |
| PH (déf = 35%) | 33,2 | 38,4 | 26,2 | 29,3 |

| Propriétés dynamiques en déformation (10Hz / déf 0, 15 % - 50 %): | | | | |
|---|---|---|---|---|
| DeltaG* | 4,05 | 3,43 | 2,71 | 1,64 |
| tgδ | 0,355 | 0,308 | 0,306 | 0,254 |
| G" | 1,230 | 1,050 | 0,872 | 0,605 |

Cet exemple montre que la composition la plus efficace pour réduire l'hystérèse aux faibles déformations est la composition où l'on associe à la fois DPG et DDCHMI (composition 19).

### Exemple 5

On utilise les quatre compositions suivantes :
Composition 20 : formule F1 de base où le SBR est le SSBR A ;
Composition 21 : composition 20 dans laquelle on a ajouté 0,4 pce (2,2 mmoles) de dicyclohexylamine (DCHA) ;
Composition 22 : composition 20 dans laquelle on a ajouté 0,8 pce (3,8 mmoles) de DCHA;
Composition 23 : composition 20 dans laquelle on a ajouté 0,8 pce (3 mmoles) de DDCHMI.

La composition 20 est la composition témoin, les compositions 21 à 23 étant conformes à l'invention.
La réalisation des compositions et leur vulcanisation sont effectuées comme dans l'exemple 1. L'addition des amines, pour les compositions 21, 22 et 23, s'effectue au mélangeur interne, lors de la première étape de ce travail thermomécanique.

Les résultats sont donnés dans le tableau 6.

**TABLEAU 6**

| Compositions | 20 | 21 | 22 | 23 |
|---|---|---|---|---|
| Formule | F1 | F1 | F1 | F1 |
| DCHA (pce/mmoles) | 0 | 0,4/2,2 | 0,8/3,8 | |
| DDCHMI RAJOUTEE (pce/mmmoles) | 0 | 0 | 0 | 0,8/3 |

| Propriétés à l'état non vulcanisé : | | | | |
|---|---|---|---|---|
| ML(1+4)100° | 51 | 51 | 50 | 51 |

| Propriétés à l'état vulcanisé : | | | | |
|---|---|---|---|---|
| Shore | 64,0 | 63,1 | 61,8 | 59,4 |
| MA10 | 5,10 | 4,78 | 4,79 | 3,95 |
| MA100 | 1,72 | 1,70 | 1,72 | 1,57 |
| MA300 | 2,03 | 2,03 | 2,06 | 1,96 |
| MA300/MA100 | 1,18 | 1,19 | 1,20 | 1,25 |
| Scott20° Fr | 18,1 | 19,8 | 20,3 | 19,0 |
| Ar% | 520 | 550 | 560 | 570 |
| PH (déf = 35%) | 33,6 | 30,5 | 30,3 | 29,4 |

| Propriétés dynamiques en déformation (10 Hz / déf 0, 15 % - 50 %) : | | | | |
|---|---|---|---|---|
| DeltaG* | 4,05 | 3,42 | 3,23 | 1,95 |
| tgδ | 0,355 | 0,327 | 0,322 | 0,266 |
| G" | 1,230 | 1,070 | 1,010 | 0,690 |

Cet exemple montre que l'addition d'amines DCHA et DDCHMI permet de réduire par rapport au témoin les hystérèses aux faible et forte déformations. Cependant la DDCHMI (composition 23) présente une efficacité plus importante.

### Exemple 6

On utilise les compositions suivantes :
Composition 24 : formule F1 où le SBR est le SSBR A ;
Composition 25 : composition 24 à laquelle on a ajouté 0,8 pce de DDCHMI ;
Composition 26 : composition 24 où l'on utilise 5,7 pce de Si266 de la société Degussa (bispropyltriéthoxysilane disulfure) au lieu des 6,4 pce de Si69 ;
Composition 27 : composition 26 comportant en outre 0,8 pce de DDCHMI.

Les compositions 25 et 27 sont conformes à l'invention, les compositions 24 et 26 étant des compositions témoins.

La réalisation des compositions et leur vulcanisation sont effectuées comme dans l'exemple 1. Pour les compositions 25 et 27, l'addition des amines s'effectue au mélangeur interne, lors de la première étape de ce travail thermomécanique.

Les résultats sont consignés dans le tableau 7.

**TABLEAU 7**

| Compositions | 24 | 25 | 26 | 27 |
|---|---|---|---|---|
| Formule | F1 | F1 | F1 | F1 |
| Si69 (pce) | 6,4 | 6,4 | 0 | 0 |
| Si266 (pce) | 0 | 0 | 5,7 | 5,7 |
| DDCHMI (pce) | 0 | 0,8 | 0 | 0,8 |

| Propriétés à l'état non vulcanisé : | | | | |
|---|---|---|---|---|
| ML(1+4)100° | 51 | 51 | 49 | 48 |

| Propriétés à l'état vulcanisé : | | | | |
|---|---|---|---|---|
| Shore | 64,0 | 59,4 | 59,0 | 58,2 |
| MA10 | 5,10 | 3,95 | 4,09 | 4,01 |
| MA100 | 1,72 | 1,57 | 1,20 | 1,18 |
| MA300 | 2,03 | 1,96 | 1,19 | 1,11 |
| MA300/MA100 | 1,18 | 1,25 | 0,99 | 0,94 |
| Scott20° Fr | 18,1 | 19,0 | 16,1 | 15,0 |
| Ar% | 520 | 570 | 720 | 750 |
| PH (déf = 35%) | 33,2 | 29,4 | 42,8 | 44,1 |

| Propriétés dynamiques en déformation (10 Hz / déf 0, 15 % - 50 %) : | | | | |
|---|---|---|---|---|
| DeltaG* | 4,05 | 1,95 | 2,68 | 2,38 |
| tgδ | 0,355 | 0,266 | 0,312 | 0,295 |
| G" | 1,230 | 0,690 | 0,905 | 0,818 |

Cet exemple montre que l'addition de DDCHMI permet une amélioration plus importante de l'hystérèse aux faibles déformations dans le cas d'un agent de liaison conforme à l'invention (Si69 ou Si266) et que l'utilisation de Si69 (comportant quatre atomes de soufre dans la molécule) donne de meilleurs résultats que l'utilisation de Si266 qui ne comporte que deux atomes de soufre dans la molécule en ce qui concerne l'hystérèse à faibles et fortes déformations et le renforcement.

### Exemple 7

On utilise les compositions suivantes :
Composition 28 : formule F1 où le SBR est le SSBR A ;
Composition 29 : formule F1 où le SBR est le SSBR B ;
Composition 30 : composition 29 ne contenant que 3,2 pce de Si69 ;
Composition 31 : composition 29 dépourvue d'agent de liaison ;
Composition 32 : formule F1 dans laquelle le SBR est le SSBR C ;
Composition 33 : composition 32, où la teneur en Si69 n'est que de 3,2 pce ;
Composition 34 : composition 32 dépourvue d'agent de liaison.

Les compositions 29, 30, 32 et 33 sont conformes à l'invention, les compositions 28, 31, 34 étant des compositions témoins.

La réalisation des compositions et leur vulcanisation sont effectuées comme dans l'exemple 1.

Les résultats sont donnés dans le tableau 8.

**TABLEAU 8**

| Composition | 28 | 29 | 30 | 31 | 32 | 33 | 34 |
|---|---|---|---|---|---|---|---|
| Formule | F1 | F1 | F1 | F1 | F1 | F1 | F1 |
| Si69 (pce) | 6,4 | 6,4 | 3,2 | 0 | 6,4 | 3,2 | 0 |
| SSBR | A | B | B | B | C | C | C |

| Propriétés à l'état non vulcanisé : | | | | | | | |
|---|---|---|---|---|---|---|---|
| ML(1+4)100° | 51 | 55 | 68 | 147 | 54 | 59 | 132 |

| Propriétés à l'état vulcanisé : | | | | | | | |
|---|---|---|---|---|---|---|---|
| Shore | 64,0 | 58,8 | 60,0 | 66,8 | 56,5 | 59,2 | 65,0 |
| MA10 | 5,10 | 3,83 | 4,64 | 7,65 | 3,48 | 4,33 | 7,28 |
| MA100 | 1,72 | 1,71 | 1,36 | 0,94 | 1,61 | 1,37 | 0,78 |
| MA300 | 2,03 | 2,26 | 1,52 | 0,52 | 2,19 | 1,59 | 0,41 |
| MA300/MA100 | 1,18 | 1,32 | 1,12 | 0,55 | 1,36 | 1,16 | 0,53 |
| Scott20° Fr | 18,1 | 20,9 | 18,0 | 8,0 | 20,4 | 18,6 | 7,1 |
| Ar% | 520 | 580 | 720 | 1030 | 580 | 680 | 1020 |
| PH (déf = 35%) | 33,2 | 25,1 | 33,5 | 54,7 | 26,1 | 33,7 | 59,9 |

| Propriétés dynamiques en déformation (10 Hz / déf 0, 15 % - 50 %) : | | | | | | | |
|---|---|---|---|---|---|---|---|
| DeltaG* | 4,05 | 1,09 | 1,74 | 4,32 | 1,03 | 1,77 | 5,15 |
| tgδ | 0,355 | 0,216 | 0,242 | 0,263 | 0,224 | 0,252 | 0,297 |
| G" | 1,230 | 0,433 | 0,590 | 1,110 | 0,436 | 0,618 | 1,390 |

Cet exemple montre que la présence de groupes aminés n'est pas suffisante pour améliorer le compromis de propriétés hystérétiques et de cohésion mécanique, il faut en outre la présence d'un agent de liaison conforme à la formule (I), et de préférence la teneur en agent de liaison ou ensemble d'agents de liaison conformes à cette formule doit être au moins égal à 4 % de la teneur en poids de la silice, ou de l'ensemble des silices dans la composition, ce qui est le cas des compositions 29, 30, 32 et 33, les résultats étant meilleurs pour les compositions 29 et 32 où la teneur en agent de liaison est supérieure à 4 % du poids de silice.

Bien entendu, l'invention n'est pas limitée aux exemples de réalisation précédemment décrits, à partir desquels on peut envisager d'autres modes de réalisation de l'invention.

## Revendications

1. Composition de caoutchouc vulcanisable au soufre **caractérisée en ce qu'**elle comporte :
a) au moins un polymère choisi dans l'ensemble constitué par les polymères diéniques, les copolymères oléfine/diène monomère et les copolymères iso-oléfine/para-alkylstyrène halogénés;
b) de la silice comme charge ;
c) au moins un agent favorisant la liaison entre la silice et le polymère, cet agent ayant la formule (I) :
Z¹-R¹-Sₙ-R²-Z²
dans laquelle :
n est un nombre entier de 2 à 8,
R¹ et R², qui peuvent être identiques ou différents, sont choisis chacun dans l'ensemble formé par les groupes alkylènes substitués ou non substitués ayant un total de 1 à 18 atomes de carbone et les groupes arylènes substitués ou non substitués ayant un total de 6 à 12 atomes de carbone,
Z¹ et Z², qui peuvent être identiques ou différents, représentent chacun un groupe 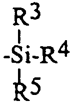
où R³, R⁴ et R⁵, qui peuvent être identiques ou différents, sont choisis chacun dans l'ensemble formé par les groupes alkyles ayant de 1 à 4 atomes de carbone, les groupes phényles, les groupes alcoxyles ayant de 1 à 8 atomes de carbone et les groupes cycloalcoxyles ayant de 5 à 8 atomes de carbone, à la condition qu'au moins un des R³, R⁴ et R⁵ soit un alcoxyle ou un cycloalcoxyle ;
d) au moins une guanidine substituée par au moins deux groupes qui peuvent être identiques ou différents et qui sont choisis chacun dans l'ensemble constitué par les groupes alcoyles, aryles ou aralcoyles ;
et **en ce qu'**elle présente au moins une des caractéristiques suivantes :
- elle comporte au moins un polymère diénique qui comporte au moins un groupe terminal aminé d'une amine aliphatique ou cycloaliphatique qui lui est lié en extrémité de chaîne, le polymère étant alors dépourvu de groupement alcoxysilane et de groupement silanol ;
- la composition comporte au moins une amine aliphatique ou cycloaliphatique libre.

2. Composition selon la revendication 1, **caractérisée en ce que** la charge est constituée entièrement de silice, ou elle en contient au moins 40 % en poids et avantageusement au moins 50 % en poids.

3. Composition selon l'une quelconque des revendications 1 à 2, **caractérisée en ce que** dans l'agent de liaison de formule (I), n est supérieur à 2, ou s'il y a plusieurs tels agents, au moins 80 % de n est supérieur à 2 pour l'ensemble de ces composés.

4. Composition selon l'une quelconque des revendications 1 à 3, **caractérisée en ce que** la teneur en agent de formule (I), ou en mélange de tels agents, est d'au moins 4 % en poids par rapport au poids de la silice, ou du mélange de silices, utilisés comme charge.

5. Composition selon l'une quelconque des revendications 1 à 4, **caractérisée en ce que** la teneur en guanidine, ou en mélange de guanidines, est de 0,5 à 4 % en poids par rapport à la silice ou au total des silices, cette teneur étant avantageusement de 1 à 3 % en poids.

6. Composition selon l'une quelconque des revendications 1 à 5, **caractérisée en ce que** la teneur en amine libre aliphatique ou cycloaliphatique, ou en mélange d'amines libres aliphatiques ou cycloaliphatiques, est de 0,5 à 4 % en poids par rapport à la silice ou au total des silices, cette teneur étant avantageusement de 1 à 3 % en poids.

7. Composition selon l'une quelconque des revendications 1 à 6, **caractérisée en ce qu'**elle comporte au moins une amine libre aliphatique ou cycloaliphatique dispersée de façon homogène dans la composition.

8. Composition selon la revendication 7, **caractérisée en ce que** le polymère est réalisé en solution et **en ce que** l'amine aliphatique ou cycloaliphatique est introduite dans cette solution après l'arrêt de la polymérisation, avant stripping du solvant.

9. Bande de roulement d'enveloppe de pneumatique comportant au moins une composition selon l'une quelconque des revendications 1 à 8.

10. Bande de roulement obtenue par vulcanisation de la bande de roulement selon la revendication 9.

11. Enveloppe de pneumatique comportant au moins une composition selon l'une quelconque des revendications 1 à 8.

12. Enveloppe de pneumatique obtenue par vulcanisation de l'enveloppe de pneumatique selon la revendication 11.

## Patentansprüche

1. Mit Schwefel vulkanisierbare Kautschukmischung, **dadurch gekennzeichnet, dass** sie enthält:
a) mindestens ein Polymer, das unter den Dienpolymeren, den Olefin/Dienmonomer-Copolymeren und den halogenierten Isoolefin/p-Alkylstyrol-Copolymeren ausgewählt ist;
b) Kieselsäure als Füllstoff;
c) mindestens einen Stoff, der die Bindung von Kieselsäure und Polymer begünstigt, wobei dieser Stoff die folgende Formel (I) besitzt:
Z¹-R¹-Sₙ-R²-Z²,
worin:
n eine ganze Zahl von 2 bis 8 bedeutet,
die Gruppen R¹ und R², die identisch oder verschieden sein können, jeweils unter den substituierten oder unsubstituierten Alkylengruppen mit 1 bis 18 Kohlenstoffatomen und den substituierten oder unsubstituierten Arylengruppen mit 6 bis 12 Kohlenstoffatomen ausgewählt sind,
die Gruppen Z¹ und Z², die identisch oder voneinander verschieden sein können, jeweils eine Gruppe 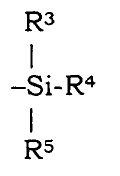
bedeuten, worin die Gruppen R³, R⁴ oder R⁵, die gleich oder verschieden sein können, jeweils unter den Alkylgruppen mit 1 bis 4 Kohlenstoffatomen, den Phenylgruppen, den Alkoxygruppen mit 1 bis 8 Kohlenstoffatomen und den Cycloalkoxygruppen mit 5 bis 8 Kohlenstoffatomen ausgewählt sind, mit der Maßgabe, dass mindestens eine der Gruppen R³, R⁴ und R⁵ eine Alkoxygruppe oder eine Cycloalkoxygruppe ist;
d) mindestens ein Guanidin, das mit mindestens zwei Gruppen substituiert ist, die gleich oder verschieden sein können und die unter den Alkylgruppen, Arylgruppen oder Aralkylgruppen ausgewählt sind;
und dadurch, dass sie mindestens eine der folgenden Eigenschaften aufweist:
- sie enthält mindestens ein Dienpolymer, das mindestens eine endständige, mit einem aliphatischen oder cycloaliphatischen Amin aminierte Gruppe aufweist, die am Kettenende an das Polymer gebunden ist, wobei das Polymer dann keine Alkoxysilangruppe und keine Silanolgruppe aufweist;
- die Zusammensetzung enthält mindestens ein freies aliphatisches oder cycloaliphatisches Amin.

2. Zusammensetzung nach Anspruch 1, **dadurch gekennzeichnet, dass** der Füllstoff vollständig aus Kieselsäure besteht oder der Füllstoff mindestens 40 Gew.-% und vorteilhaft mindestens 50 Gew.-% Kieselsäure enthält.

3. Zusammensetzung nach einem der Ansprüche 1 bis 2, **dadurch gekennzeichnet, dass** in dem Verknüpfungsmittel der Formel (I) n über 2 liegt oder, falls mehrere derartige Verknüpfungsmittel vorliegen, in den gesamten Verbindungen mindestens 80 % der Werte n über 2 liegen.

4. Zusammensetzung nach einem der Ansprüche 1 bis 3, **dadurch gekennzeichnet, dass** der Gehalt des Stoffes der Formel (I) oder des Gemisches dieser Stoffe mindestens 4 Gew.-% beträgt, bezogen auf das Gewicht der Kieselsäure oder des Gemisches der Kieselsäuren, die als Füllstoff verwendet werden.

5. Zusammensetzung nach einem der Ansprüche 1 bis 4, **dadurch gekennzeichnet, dass** der Gehalt an Guanidin oder des Gemisches von Guanidinen im Bereich von 0,5 bis 4 Gew.-%, bezogen auf die Kieselsäure oder die gesamten Kieselsäuren, liegt, wobei dieser Gehalt vorteilhaft im Bereich von 1 bis 3 Gew.-% liegt.

6. Zusammensetzung nach einem der Ansprüche 1 bis 5, **dadurch gekennzeichnet, dass** der Gehalt an aliphatischem oder cycloaliphatischem freien Amin oder des Gemisches von aliphatischen oder cycloaliphatischen freien Aminen im Bereich von 0,5 bis 4 Gew.-%, bezogen auf die Kieselsäure oder die gesamten Kieselsäuren, und vorteilhaft im Bereich von 1 bis 3 Gew.-% liegt.

7. Zusammensetzung nach einem der Ansprüche 1 bis 6, **dadurch gekennzeichnet, dass** sie mindestens ein aliphatisches oder cycloaliphatisches freies Amin enthält, das homogen in der Zusammensetzung dispergiert ist.

8. Zusammensetzung nach Anspruch 7, **dadurch gekennzeichnet, dass** das Polymer in Lösung hergestellt wird und dadurch, dass das aliphatische oder cycloaliphatische Amin nach Stoppen der Polymerisation und vor dem Strippen des Lösungsmittels in die Lösung eingearbeitet wird.

9. Laufstreifen eines Luftreifens, der mindestens eine Zusammensetzung nach einem der Ansprüche 1 bis 8 enthält.

10. Laufstreifen, der durch Vulkanisation des Laufstreifens nach Anspruch 9 erhalten wird.

11. Luftreifen, der mindestens eine Zusammensetzung nach einem der Ansprüche 1 bis 8 enthält.

12. Luftreifen, der durch Vulkanisation des Luftreifens nach Anspruch 11 erhalten wird.

## Claims

1. A sulphur-vulcanisable rubber composition, **characterised in that** it comprises
a) at least one polymer selected from among the set constituted by diene polymers, olefin/diene monomer copolymers and halogenated iso-olefin/para-alkylstyrene copolymers;
b) silica as filler;
c) at least one agent which promotes the bond between the silica and the polymer, this agent having the formula (I):
Z¹-R¹-Sₙ-R²-Z²
in which:
n is an integer from 2 to 8,
R¹ and R², which may be identical or different, are each selected from among the set formed by alkylene groups, whether substituted or not substituted, having a total of 1 to 18 carbon atoms and arylene groups, whether substituted or not substituted, having a total of 6 to 12 carbon atoms,
Z¹ and Z², which may be identical or different, each represent a group 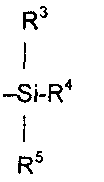
in which R³, R⁴ and R⁵, which may be identical or different, are each selected from among the set formed by alkyl groups having from 1 to 4 carbon atoms, phenyl groups, alkoxy groups having from 1 to 8 carbon atoms and cycloalkoxy groups having 5 to 8 carbon atoms, on condition that at least one of R³, R⁴ and R⁵ is an alkoxyl or a cycloalkoxyl;
d) at least one guanidine substituted by at least two groups which may be identical or different and which are each selected from the set constituted by alkyl, aryl or aralkyl groups;
and **in that** it has at least one of the following characteristics:
- it comprises at least one diene polymer which comprises at least one end group aminated with an aliphatic or cycloaliphatic amine which itself is linked to the chain end, the polymer then being devoid of alkoxysilane group and of silanol group;
- the composition comprises at least one free aliphatic or cycloaliphatic amine.

2. A composition according to Claim 1, **characterised in that** the filler is constituted entirely of silica, or contains at least 40% by weight and advantageously at least 50% by weight thereof.

3. A composition according to any one of Claims 1 to 2, **characterised in that** in the bonding agent of formula (I), n is greater than 2, or if there are several such agents, at least 80% of n is greater than 2 for all these compounds.

4. A composition according to any one of Claims 1 to 3, **characterised in that** the content of agent of formula (I), or of mixture of such agents, is at least 4 by weight relative to the weight of the silica, or of the mixture of silicas, used as filler.

5. A composition according to any one of Claims 1 to 4, **characterised in that** the content of guanidine, or of mixture of guanidines, is from 0.5 to 4% by weight relative to the silica or all the silicas, this content being advantageously 1 to 3% by weight.

6. A composition according to any one of Claims 1 to 5, **characterised in that** the content of free aliphatic or cycloaliphatic amine, or of the mixture of free aliphatic or cycloaliphatic amines, is 0.5 to 4% by weight relative to the silica or all the silicas, this content being advantageously from 1 to 3% by weight.

7. A composition according to any one of Claims 1 to 6, **characterised in that** it comprises at least one free aliphatic or cycloaliphatic amine dispersed homogenously in the composition.

8. A composition according to Claim 7, **characterised in that** the polymer is prepared in solution and **in that** the aliphatic or cycloaliphatic amine is introduced into this solution after the polymerisation has been stopped, before stripping the solvent.

9. A tread for a tyre comprising at least one composition according to any one of Claims 1 to 8.

10. A tread obtained by vulcanisation of the tread according to Claim 9.

11. A tyre comprising at least one composition according to any one of Claims 1 to 8.

12. A tyre obtained by vulcanisation of the tyre according to Claim 11.
